# EUROPÄISCHE PATENTSCHRIFT

(11) **EP 3 564 567 B1**
(45) Veröffentlichungstag und Bekanntmachung des Hinweises auf die Patenterteilung: **19.07.2023**
(21) Anmeldenummer: 19170479.0
(22) Anmeldetag: 23.04.2019
(51) Int. Cl.: F16L 21/03, F16J 15/02, F16L 21/035

(54) **DICHTUNGSRING MIT STÜTZFAHNE**
SEALING RING WITH SUPPORT FLAG
BAGUE D'ÉTANCHÉITÉ AVEC TENON DE SUPPORT

(30) Priorität: 30.04.2018 DE 202018102394 U
(43) Veröffentlichungstag der Anmeldung: 06.11.2019
(73) Patentinhaber: Theodor Cordes GmbH & Co. KG, 48308 Senden-Bösensell (DE)
(72) Erfinder: Schlautmann, Frank, 48167 Münster (DE); Höft, Heiko, 21357 Barum (DE)
(74) Vertreter: Habbel, Ludwig

(56) Entgegenhaltungen:
- EP-A2- 1 477 718
- WO-A1-02/14719
- DE-A1- 4 229 609
- DE-B3-102010 056 448
- DE-U1-202015 101 734

## Beschreibung

Die Erfindung betrifft ein Rohrdichtungsprofil nach dem Oberbegriff des Anspruchs 1.

Aus der DE 20 2015 101 734 U1 und der EP 1 477 718 A2 ist jeweils ein gattungsgemäßes Rohrdichtungsprofil bekannt. Im Wandquerschnitt eines Rohres, welches typischerweise aus einem mineralischen Werkstoff wie Beton besteht, ist ein Absatz geformt, auf welchem die Stützschulter aufliegt. Wenn der komprimierbare Dichtungsabschnitt des Rohrdichtungsprofils unter Last komprimiert wird, beispielsweise weil Scherkräfte auf das Rohr oder ein zweites, mit diesem Rohr verbundenes Rohr einwirken, wird die Verpressung des Dichtungsabschnitts begrenzt, da einerseits die Stützschulter härter ausgestaltet ist als der Dichtungsabschnitt, also einen höheren Widerstand gegen einwirkende Druckkräfte aufweist, und da andererseits der erwähnte Absatz im Wandquerschnitt eine Relativbewegung der beiden Rohre quer zu ihrer Längsachse begrenzt. Im Rahmen des vorliegenden Vorschlags wird davon ausgegangen, dass das Rohrdichtungsprofil als Dichtungsring an einem Rohr angeordnet ist, während das erwähnte zweite Rohr als "das benachbarte Rohr" oder als "das andere Rohr" bezeichnet wird.

In diesem Zusammenhang wird davon ausgegangen, dass das Rohrdichtungsprofil in der Weise ausgerichtet ist, dass sich der Dichtungsabschnitt von einer Basis nach oben bis in eine erste Höhe erstreckt, und dass die Stützschulter in einer zweiten, vergleichsweise niedrigeren Höhe verläuft. Wenn das Rohrdichtungsprofil zu einem Dichtungsring verarbeitet ist, der auf einem Spitzende eines Rohres oder in einer Muffe eines Rohres montiert werden kann, stimmen derartige Richtungsangaben wie "oben" oder "unten" natürlich nur für einen bestimmten Abschnitt des Ringumfangs. Vor der Konfektionierung zu einem geschlossenen Dichtungsring jedoch wird das Rohrdichtungsprofil beispielsweise als geradlinig verlaufender Strang aus einem Elastomerwerkstoff bereitgestellt, und technische Zeichnungen, wie sie zur Beschreibung des Rohrdichtungsprofils üblich sind und beispielsweise auch in Verkaufsunterlagen verwendet werden, zeigen typischerweise einen Querschnitt durch das Rohrdichtungsprofil, wobei der Profilquerschnitt in der oben beschriebenen Weise ausgerichtet ist.

Ebenso werden im Rahmen des vorliegenden Vorschlags Richtungsangaben wie "vorne" oder "hinten" verwendet. Bei diesen Richtungsangaben wird der Teil des Rohrdichtungsprofils, der als erstes in Kontakt mit einem benachbarten Rohr gerät, wenn zwei Rohre miteinander verbunden werden, als der vordere Teil des Rohrdichtungsprofils bezeichnet. Es handelt sich also bei der Vorderseite des Rohrdichtungsprofils stets um die Seite, die zum benachbarten Ende des Rohrs weist, wenn das Rohrdichtungsprofil zu einem Dichtungsring verarbeitet und auf dem Spitzende bzw. in der Muffe des Rohres montiert ist. Dementsprechend befindet sich die Stützschulter "hinter" dem Dichtungsabschnitt des Rohrdichtungsprofils.

Aufgrund von Fertigungstoleranzen können in den Wandquerschnitten der hergestellten Rohre die erwähnten Absätze unterschiedlich hoch ausgeprägt sein. Bei unterschiedlichen Rohrdurchmessern - also bei der Herstellung von Rohren mit unterschiedlichen Nenndurchmessern - können ebenfalls unterschiedlich hohe Absätze im jeweiligen Wandquerschnitt vorgesehen sein. Für die Herstellung von Rohrdichtungsprofilen bedeutet dies eine Vielzahl unterschiedlicher Querschnittsgeometrien, was die Herstellungskosten aufgrund der Vielzahl an unterschiedlichen erforderlichen Formwerkzeugen nachteilig beeinflusst.

Aus der DE 10 2010 056 448 B3 ist eine Rohrverbindungsanordnung bekannt, die eine Verbindung von zwei Rohrelementen betrifft, wie sie insbesondere beim Verbinden von Lüftungsrohren zum Einsatz kommt. Dabei dient ein als Ring ausgestaltetes Dichtungsmittel gleichzeitig auch als Arretierungsmittel zum Arretieren des ersten und zweiten Rohrelements aneinander. Der Ring weist einen Grundkörper auf, von dem jeweils ein Dichtungs- und ein Arretierungsabschnitt nach oben ragen. Der Arretierungsabschnitt ist vor dem Dichtungsabschnitt angeordnet und wirkt mit einem Verriegelungselement zusammen, das an dem anderen Rohr als nach innen ragender Vorsprung ausgestaltet ist. Wenn die Verbindung der beiden Rohrelemente hergestellt wird und das andere Rohr auf den Ring des ersten Rohrs aufgeschoben wird, hintergreift zunächst das Verriegelungselement des anderen Rohrs den Arretierungsabschnitt des Dichtungsmittels. Beim weiteren Aufschieben legt sich dann der Dichtungsabschnitt des Dichtungsmittels an das andere Rohr an und bewirkt die gewünschte Abdichtung. Dadurch, dass die Arretierung der beiden Rohrabschnitte mithilfe des Elastomerwerkstoffs des Dichtungsmittels bewirkt wird, wird eine sowohl zuverlässige als auch flexible und auch wieder lösbare Verbindung von Rohren ermöglicht.

Aus der DE 42 29 609 A1 ist eine Abdichtung zwischen zwei ineinandersteckbaren Teilen, insbesondere Rohren bekannt, wobei die Dichtung einen komprimierbaren Elastomerkörper aufweist sowie ein Einknüpfteil, welches als Gleitmantel auf dem Elastomerkörper aufliegt und einen Anker aufweist, mit welchem es in den Elastomerkörper eingeknüpft werden kann. Durch die Bereitstellung unterschiedlicher Einknüpfteile können bei Verwendung desselben Elastomerkörpers unterschiedliche Dichtungen geschaffen werden, so dass die Dichtfunktion der Abdichtung zwischen den Teilen individuell beeinflusst werden kann.

Der Erfindung liegt die Aufgabe zugrunde, ein gattungsgemäßes Rohrdichtungsprofil dahingehend zu verbessern, dass es für die Anwendung an Rohren mit unterschiedlich hohen Absätzen geeignet ist. Weiterhin liegt der Neuerung die Aufgabe zugrunde, eine Dichtungsanordnung anzugeben, welche möglichst wirtschaftlich eine zuverlässige Abdichtung auch bei unterschiedlichen Querschnittsgeometrien der Rohrwandungen ermöglicht.

Diese Aufgabe wird durch ein Rohrdichtungsprofil nach Anspruch 1 und eine Dichtungsanordnung nach Anspruch 12 gelöst. Vorteilhafte Ausgestaltungen der Erfindung sind in den Unteransprüchen beschrieben.

Die Erfindung schlägt mit anderen Worten vor, keine Querschnittsgeometrie des Rohrdichtungsprofils in der Art fest vorzugeben, dass die Stützschulter liegend ausgerichtet und in einer bestimmten Höhe angeordnet ist - und somit auf eine bestimmte Ausgestaltung des Absatzes im Wandquerschnitt eines Rohres angewiesen ist. Vielmehr ist vorschlagsgemäß die Stützschulter im Querschnitt des Rohrdichtungsprofils stehend ausgerichtet. Dies ist nicht die Ausrichtung, in welcher die Stützschulter ihre Stützwirkung gegen Scherkräfte entfaltet, so dass diese stehende Ausrichtung auch als Bereitschaftsstellung der Stützschulter bezeichnet ist.

In ihrer Bereitschaftsstellung ragt die Stützschulter also radial nach außen, wenn das vorschlagsgemäße Rohrdichtungsprofil zu einem Dichtungsring verarbeitet ist, der auf dem Spitzende eines Rohrs montiert ist. Oder sie ragt radial nach innen, wenn das Rohrdichtungsprofil zu einem Dichtungsring verarbeitet ist, der im Muffenende eines Rohrs angeordnet ist. Spätestens bei der Verbindung des betreffenden Rohrs mit einem benachbarten Rohr wird daher die radial bzw. stehend ausgerichtete Stützschulter von dem benachbarten Rohr erfasst und nach "hinten" in eine axial bzw. liegend ausgerichtete Gebrauchsstellung umgeklappt und auf den erwähnten Absatz im Wandquerschnitt des Rohrs gelegt. Alternativ dazu, die Stützschulter erst während der Herstellung der Rohrverbindung durch den Kontakt mit einem benachbarten Rohr umzuklappen, kann dieses Umklappen ggf. bereits vorher durch einen separaten Montageschritt erfolgen.

In der Gebrauchsstellung befindet sich die Stützschulter tiefer als das obere Ende des Dichtungsabschnitts. Sie erlaubt daher eine gewisse, definierte Kompression des Dichtungsabschnitts in radialer Richtung und kann zur Begrenzung dieser Kompression ihre Stützwirkung gegen Scherkräfte entfalten.

Jedenfalls kann die Stützschulter des vorschlagsgemäß ausgestalteten Rohrdichtungsprofils problemlos bei Rohren mit unterschiedlich hoch ausgestalteten Absätzen in deren jeweiligen Wandquerschnitten verwendet werden. Die Stützschulter wird nämlich erst während des Umklappvorgangs an die jeweilige Querschnittsgeometrie des Rohrs angepasst. Nachdem die Stützschulter in ihre Gebrauchsstellung umgeklappt ist, verhindert sie zuverlässig einen unmittelbaren Kontakt der beiden Rohre miteinander, beispielsweise "Beton auf Beton", welcher ansonsten angesichts der Oberflächenrauhigkeit der beiden Rohre zu unerwünschten punktuellen Druckspitzen und zu einer Schädigung der Rohre führen könnte.

Ein oberer Bereich der Stützschulter - bei ihrer stehenden Ausrichtung in ihrer Bereitschaftsstellung - wird als deren Stützbereich bezeichnet, weil nämlich dieser obere Bereich nach dem Umklappen in die Gebrauchsstellung auf dem Absatz im Wandquerschnitt des Rohrs aufliegt und zur Abstützung gegen Scherkräfte dient. Um die im Betrieb auftretenden, ggf. hohen Kräfte aufnehmen zu können, kann dieser Stützbereich vorteilhaft vergleichsweise hart ausgestaltet sein, beispielsweise härter als der Dichtungsabschnitt des Rohrdichtungsprofils. Um angesichts dieser harten Ausgestaltung der Stützschulter das Umklappen aus der Bereitschaft- in die Gebrauchsstellung zu erleichtern, kann die Stützschulter unterhalb des Stützbereichs vorteilhaft einen Bereich aufweisen, der eine Verformung des Stützabschnitts erleichtert und daher als Scharnierabschnitt bezeichnet ist.

Der Scharnierabschnitt kann beispielsweise durch eine bestimmte Querschnittsgeometrie der Stützschulter in diesem Bereich geschaffen werden, beispielsweise indem die Stützschulter im Scharnierabschnitt einen verringerten Materialquerschnitt aufweist und beispielsweise mäanderförmig oder serpentinenartig verläuft. Alternativ dazu - oder auch zusätzlich dazu - kann die Stützschulter in ihrem Scharnierabschnitt aus einem anderen Material bestehen als in ihrem Stützbereich, beispielsweise aus einem weicheren Material. Im sogenannten 2K-Extrusionsverfahren werden in an sich bekannter Weise zwei unterschiedliche Materialien gleichzeitig extrudiert, um innerhalb des Rohrdichtungsprofils Bereiche aus zwei unterschiedlichen Werkstoffen zu schaffen, so dass das Rohrdichtungsprofil in diesem 2K-Extrusionsverfahren hergestellt werden kann.

Vorteilhaft kann im Querschnitt des Rohrdichtungsprofils vor dem Dichtungsabschnitt eine Anlaufschräge angeordnet sein, die bei Herstellung einer Rohrverbindung das jeweils andere Rohr führt und somit die Herstellung der Rohrverbindung erleichtert. Dabei kann vorteilhaft diese Anlaufschräge härter ausgestaltet sein als der Dichtungsabschnitt. Beispielsweise können auch hier mittels des 2K-Extrusionsverfahrens unterschiedliche Werkstoffe Verwendung finden, oder der Dichtungsabschnitt und die Anlaufschräge können durch die Anordnung von Hohlkammern bzw. durch deren Vermeidung unterschiedlich hart ausgestaltet sein. Bei der Herstellung im 2K-Extrusionsverfahrens kann beispielsweise der oben erwähnte harte Bereich der Stützschulter sowie die oben erwähnte Anlaufschräge, beispielsweise das vordere Ende des Rohrdichtungsprofils, aus dem gleichen, härteren Material und der Dichtungsabschnitt aus dem vergleichsweise weicheren Material gefertigt werden.

Es kann davon ausgegangen werden, dass während der Herstellung der Rohrverbindung das andere Rohr den Dichtungsabschnitt des Rohrdichtungsprofils komprimiert und anschließend gegen die Stützschulter gerät und diese aus ihrer Bereitschaftsstellung in ihrer Gebrauchsstellung umklappt. Dabei ist wünschenswert, dass die Stützschulter entlang dem gesamten Umfang eines Dichtungsrings von dem anderen Rohr sicher erfasst und umgeklappt wird. In der Praxis ist davon auszugehen, dass die beiden Rohre nicht ideal achsgleich ausgerichtet sind, sondern einen gewissen axialen Versatz zueinander aufweisen. Um sicherzustellen, dass das andere Rohr die Stützschulter tatsächlich entlang dem gesamten Umfang des Dichtungsrings erfassen kann, kann vorteilhaft vorgesehen sein, dass die Stützschulter sich in ihrer Bereitschaftsstellung radial weiter erstreckt als der Dichtungsabschnitt des Dichtungsrings. Dementsprechend kann vorteilhaft vorgesehen sein, dass sich die Stützschulter des Rohrdichtungsprofils bis in eine dritte Höhe erstreckt, die nicht nur größer ist als die zweite Höhe, welche die Stützschulter in ihrer Gebrauchsstellung einnimmt, sondern die auch größer ist als die erste Höhe, bis in welche sich nämlich der Dichtungsabschnitt erstreckt.

In einer Ausgestaltung kann vorteilhaft vorgesehen sein, dass die Stützschulter als separates Bauteil ausgestaltet ist. Auf diese Weise kann ein herkömmliches Rohrdichtungsprofil, wie es beispielsweise für eine Keildichtung verwendet wird, weiter verwendet und zu einem vorschlagsgemäßen Rohrdichtungsprofil weiterentwickelt werden, indem es mit der zusätzlich vorgesehenen Stützschulter kombiniert wird.

Dabei kann beispielsweise vorgesehen sein, dass diese separate Stützschulter an dem Dichtungsabschnitt befestigt ist. So wird an der Baustelle eine einfache Montage des Dichtungsrings ermöglicht, indem dort lediglich ein einzelnes - nämlich zweiteiliges - Bauteil gehandhabt werden muss. Die Befestigung kann dadurch erfolgen, dass die Stützschulter mit dem übrigen Dichtungsprofil verklebt bzw. vulkanisiert ist. Oder es kann eine formschlüssige Verbindung in Art einer Nut-und-Feder-Verbindung vorgesehen sein, was durch eine Änderung an der Produktionsform des herkömmlichen Rohrdichtungsprofils erreicht werden kann, die mit einem vergleichsweise geringen Aufwand erzielbar ist. Insbesondere können so unterschiedliche herkömmliche Rohrdichtungsprofile mit dem gleichen oder wenigen unterschiedlichen separat hergestellten Stützschulterprofilen kombiniert werden, so dass mit einem geringen Fertigungsaufwand eine Vielzahl unterschiedlicher Querschnittsgeometrien vorschlagsgemäße Rohrdichtungsprofile geschaffen werden kann.

Das vorschlagsgemäße Rohrdichtungsprofils kann zur Schaffung einer integrierten Dichtung genutzt werden, indem vorteilhaft am Dichtungsabschnitt und / oder an der Stützschulter jeweils unten Verankerungsfüße angeformt sind. Um einen zuverlässigen Halt im Werkstoff eines Rohres sicherzustellen, kann beispielsweise vorgesehen sein, dass sich der Querschnitt der Verankerungsfüße jeweils nach unten erweitert.

In einer ersten Ausgestaltung kann vorgesehen sein, dass die Stützschulter in Art einer "Fahne" in ihrer Bereitschaftsstellung stehend ausgerichtet ist. In einer anderen Ausgestaltung kann allerdings auch vorgesehen sein, dass die Stützschulter nicht eine mehr oder weniger geradlinig verlaufende Fahne bildet, sondern im Querschnitt gesehen einen Ringquerschnitt aufweist. Dieser Ringquerschnitt ist nicht als geschlossener Ring ausgestaltet und umgibt eine Hohlkammer, sondern weist vielmehr einen Schlitz auf, welcher den Ring unterbricht. Je nachdem, wo im Umfang des Rings der Schlitz vorgesehen ist, kann bei einem Kontakt mit dem anderen Rohr der obere Umfangsabschnitt des Rings lediglich verschoben werden, oder aber ggf. um annähernd 180° geschwenkt werden.

Eine vorschlagsgemäße Dichtungsanordnung besteht darin, dass bei einem Rohr, welches ein als Muffe oder als Spitzende ausgestaltetes Rohrende aufweist, ein vorschlagsgemäß ausgestaltetes Rohrdichtungsprofil in Form eines geschlossenen Rings nahe des Rohrendes angeordnet ist.

Eine solche Dichtungsanordnung kann unter Verwendung eines einstückigen Rohrdichtungsprofils geschaffen werden. Es kann jedoch auch vorgesehen sein, dass die Stützschulter als separates Element ausgestaltet ist welches hinter dem Dichtungsabschnitt angeordnet ist. Beispielsweise kann, wie weiter oben erläutert, dieses separate Element der Stützschulter mit einem den Dichtungsabschnitt aufweisenden herkömmlichen Rohrdichtungsprofil verbunden sein.

Alternativ dazu kann jedoch vorgesehen sein, dass die Stützschulter ohne Verbindung zu dem Dichtungsabschnitt hinter dem Dichtungsabschnitt angeordnet ist. In diesem Fall kann nach wie vor ein herkömmliches Rohrdichtungsprofil verwendet werden, beispielsweise eine handelsübliche Keildichtung. An der Baustelle wird daher am Rohrende zunächst die vorschlagsgemäß vorgesehene Stützschulter montiert und anschließend das erwähnte herkömmliche Rohrdichtungsprofil. Bei Erzeugung einer Rohrverbindung verformt das andere Rohr die Stützschulter, so dass diese aus ihrer Bereitschaftsstellung in ihre Gebrauchsstellung gebracht wird.

Ausführungsbeispiele der Neuerung werden anhand der rein schematischen Darstellungen nachfolgend näher erläutert. Dabei zeigt
- Fig. 1 bis 3: jeweils einen Querschnitt durch eine Dichtungsanordnung bei der Herstellung einer Rohrverbindung in drei unterschiedlichen Relativstellungen der beiden Rohre zueinander,
- Fig. 4 bis 6: Querschnitte durch drei unterschiedliche Dichtungsanordnungen mit unterschiedlich hohen Absätzen in den jeweiligen Wandquerschnitten der Rohre, und
- Fig. 7 bis 13: Querschnitte durch unterschiedliche Ausführungsbeispiele von Rohrdichtungsprofilen, jeweils als Dichtungsring an einem Rohr montiert.

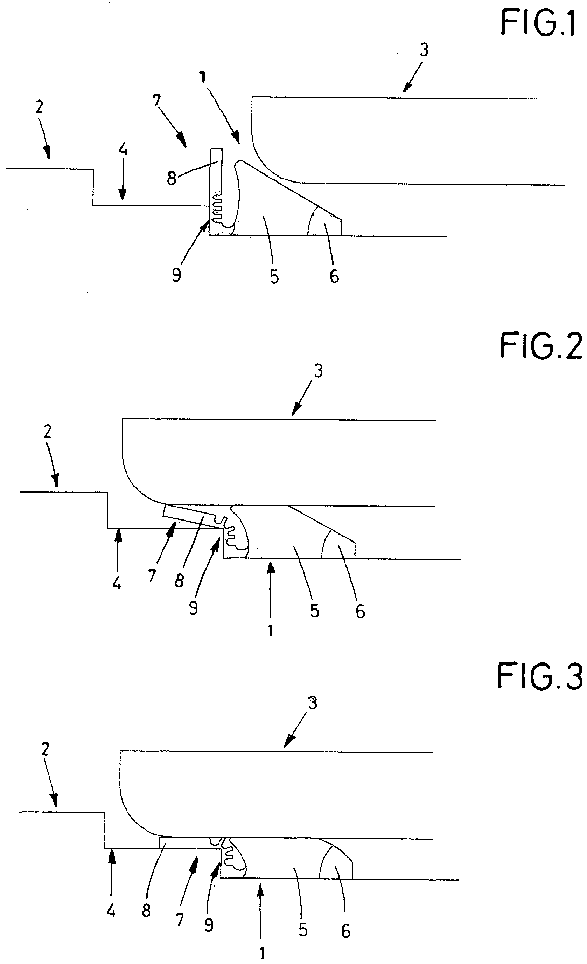

Fig. 1 zeigt eine Dichtungsanordnung, bei welcher ein Rohrdichtungsprofil 1 als Dichtungsring auf einem Rohr 2 angeordnet ist und eine Rohrverbindung des Rohrs 2 mit einem anderen Rohr 3 hergestellt werden soll. Bei dem dargestellten Ausführungsbeispiel befindet sich das Rohrdichtungsprofil 1 auf einem Spitzende des Rohrs 2 unmittelbar vor einem Absatz 4, der im Wandquerschnitt des Rohrs 2 geschaffen ist. Der Absatz 4 stellt eine axiale Verschiebesicherung für das Rohrdichtungsprofil 1 dar. So kann das Rohrdichtungsprofil 1 nicht unerwünscht weit nach hinten verlagert werden, also in Fig. 1 nach links, wenn ein benachbartes Rohr während der Herstellung einer Rohrverbindung axiale, nach hinten gerichtete Schubkräfte auf das Rohrdichtungsprofil 1 ausübt.

Das Rohrdichtungsprofil 1 weist einen Dichtungsabschnitt 5 aus einem ersten Elastomerwerkstoff auf, wobei der Dichtungsabschnitt 5 vergleichsweise weich ausgestaltet und insbesondere komprimierbar ausgestaltet ist. Ein vorderes Ende 6 des Rohrdichtungsprofils 1 besteht aus einem im Vergleich dazu härteren Werkstoff. Auch eine Stützschulter 7, die hinter dem Dichtungsabschnitt 5 angeordnet ist, besteht aus diesem zweiten, vergleichsweise härteren Werkstoff. Die Stützschulter 7 ist bei diesem Ausführungsbeispiel als stehend ausgerichtete Fahne ausgestaltet. Sie weist einen massiven oberen Stützbereich 8 auf sowie darunter einen mit Einkerbungen versehenen Scharnierabschnitt 9. Unterhalb des Scharnierabschnitts 9 ist die Stützschulter 7 mit dem Dichtungsabschnitt 5 verbunden. Das gesamte Rohrdichtungsprofils 1 ist in einem mehrkomponentigen Extrusionsverfahren hergestellt worden, beispielsweise mit einem weicheren Werkstoff für den Dichtungsabschnitt 5 und einem zweiten, härteren Werkstoff für das vordere Ende 6 und die Stützschulter 7.

In Fig. 1 befindet sich das andere Rohr 3 kurz vor einem Kontakt mit dem Rohrdichtungsprofil 1. Zur Herstellung der Rohrverbindung wird dieses andere Rohr 3 mit seinem Muffenende weiter nach links auf das Spitzende des Rohrs 2 aufgeschoben, wie anhand der Fig. 2 und 3 ersichtlich.

Fig. 2 zeigt, dass beim weiteren Aufschieben des anderen Rohrs 3 der Dichtungsabschnitt 5 komprimiert und verformt wird. Außerdem wird die Stützschulter 7 aus ihrer aufrechten Bereitschaftsstellung der Fig. 1 nach hinten umgeklappt, so dass ihr Stützbereich 8 über den Absatz 4 gelegt wird. Der Scharnierabschnitt 9 erleichtert durch seine Geometrie die Verformung der Stützschulter 7.

Fig. 3 zeigt die Situation, dass das andere Rohr 3 sich abgesenkt hat. Die Bewegung des anderen Rohrs 3 in Bezug auf das Rohr 2 wird durch den Stützbereich 8 begrenzt, welcher sich auf den Absatz 4 aufgelegt hat. Hierdurch wird die Verpressung des Dichtungsabschnitts 5 ebenfalls begrenzt, so dass eine optimale Dichtungswirkung dadurch gewährleistet ist, dass eine übermäßige, nachteilige Verpressung des Dichtungsabschnitts 5 vermieden wird.

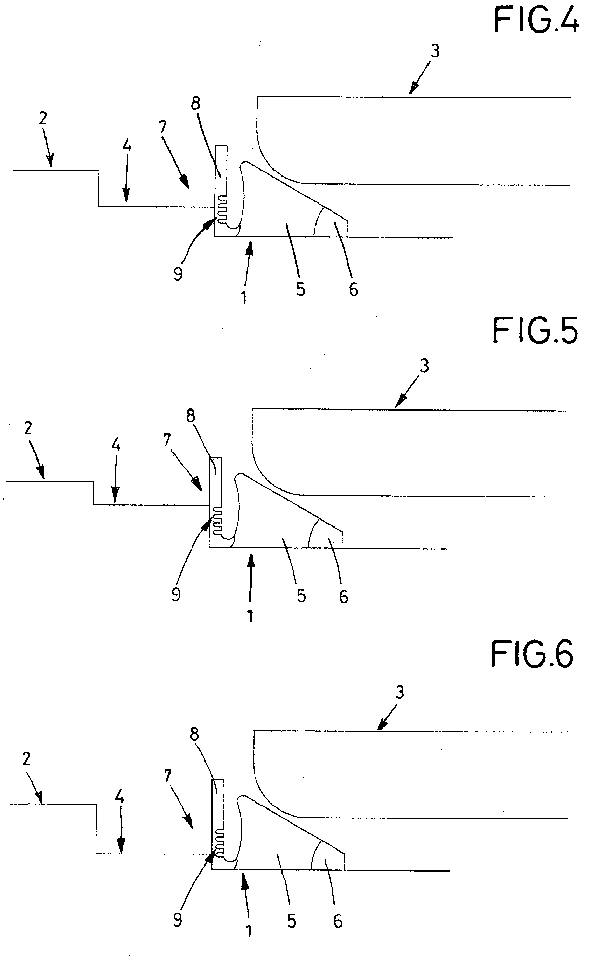

Die Fig. 4 bis 6 zeigen Dichtungsanordnungen in einer Ansicht ähnlich Fig. 1, und zwar mit jeweils dem gleichen Rohrdichtungsprofil 1, jedoch mit drei unterschiedlich ausgestalteten Rohren 2, die nämlich unterschiedlich hohe Absätze 4 aufweisen.

Die Höhe des Scharnierabschnitts 9 ermöglicht die Verwendung des gleichen Rohrdichtungsprofils 1, indem die Stützschulter 7 in unterschiedlicher Höhe, jeweils angepasst an die Höhe des Absatzes 4, aus ihrer Bereitschaftsstellung in die Gebrauchsstellung umgeklappt werden kann.

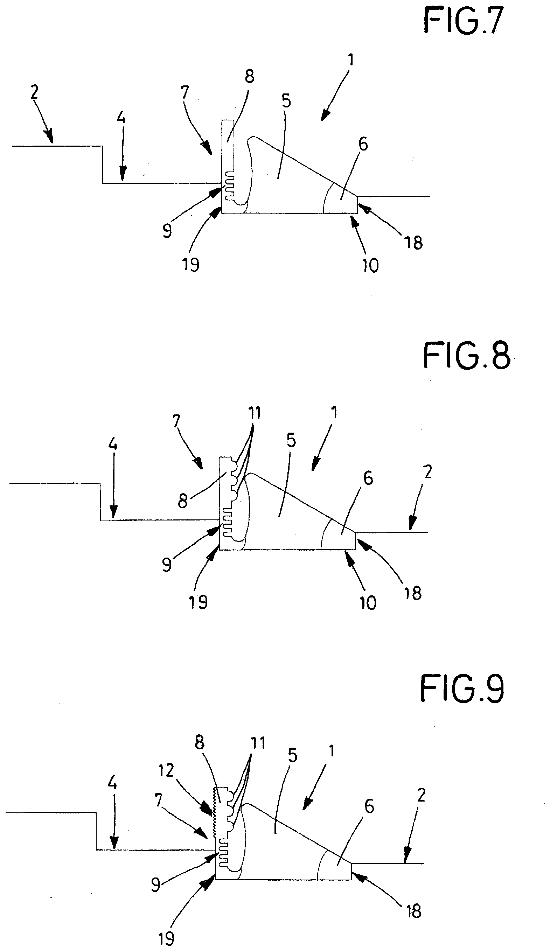

Fig. 7 zeigt in Übereinstimmung mit den Fig. 1 bis 6 das gleiche Rohrdichtungsprofil 1, bei diesem Ausführungsbeispiel allerdings in einer Nut 10, welche umlaufend in der Wand des Rohrs 2 angeordnet ist. Die Nut 10 wird durch ein vorderes Ufer 18 sowie durch ein hinteres Ufer 19 begrenzt. Die beiden Ufer 18 und 19 wirken als Verschiebesicherungen für das Rohrdichtungsprofil 1 in beiden axialen Richtungen, so dass das Rohrdichtungsprofil 1 beispielsweise auch dann nicht in unerwünschter Weise nach vorn verlagert wird, wenn eine zunächst hergestellte Rohrverbindung gelockert wird und ein zweites Rohr sich relativ zu dem Rohr 2 in axialer Richtung nach vorn bewegt. Da diese nach vorn wirkenden Auszugskräfte üblicherweise geringer sind als die Schubkräfte bei der Herstellung einer Rohrverbindung, und um das Einsetzen des Rohrdichtungsprofils 1 in die Nut 10 zu erleichtern, ist das vordere Ufer 18 gegenüber dem Nutgrund niedriger als das hintere Ufer 19.

Fig. 8 zeigt ein Ausführungsbeispiel, bei welchem der Stützbereich 8 profiliert ist und Auflagewülste 11 aufweist, auf welche sich ein anderes Rohr 3 auflegen kann.

Fig. 9 zeigt eine Weiterentwicklung des Ausführungsbeispiels der Fig. 8. Dort, wo sich seine Unterseite befindet, wenn der Stützbereich 8 in seiner Gebrauchsstellung auf dem Absatz 4 aufliegt, ist der Stützbereich 8 mit einer rutschhemmende Profilierung 12 versehen.

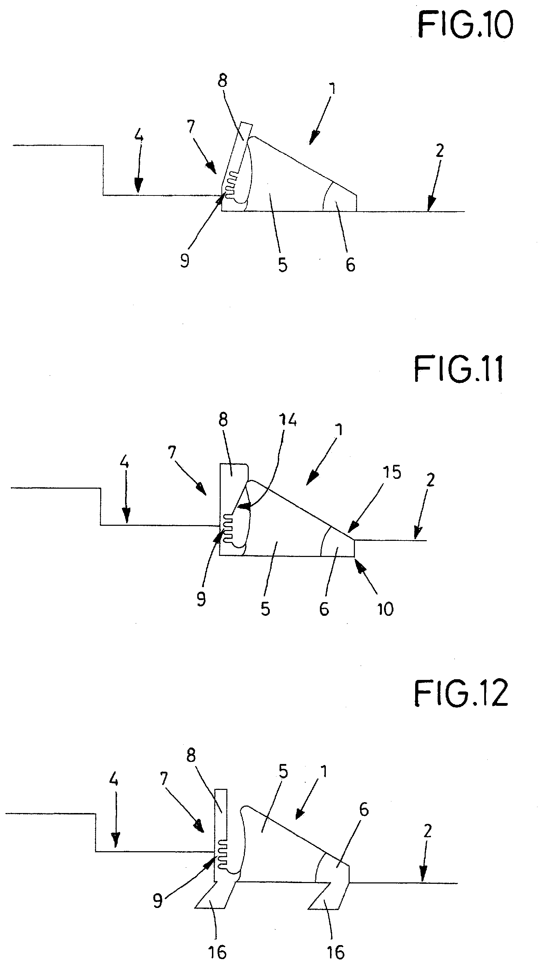

Fig. 10 zeigt ein Ausführungsbeispiel, bei welchem die Stützschulter 7 zwar ebenfalls stehend ausgerichtet ist, wenn sie sich in ihrer Bereitschaftsstellung befindet, dabei aber schräg verläuft und dem hinteren Ende des Dichtungsabschnitts 5 anliegt. Auf diese Weise wird vermieden, dass vor der Herstellung der Rohrverbindung Schmutz oder andere Fremdstoffe in den Spalt zwischen dem Dichtungsabschnitt 5 und der Stützschulter 7 eindringen.

Fig. 11 zeigt ein Ausführungsbeispiel, bei welchem das Rohr Dichtungsprofil 1 wiederum in einer Nut 10 angeordnet ist, die im Spitzende eines Rohrs 2 vorgesehen ist. Auch bei diesem Ausführungsbeispiel liegt die Stützschulter 7 dem Dichtungsabschnitt 5 an. Im Vergleich zu den anderen Ausführungsbeispielen ist in diesem Fall der Stützbereich 8 einerseits mit einer grö-βeren Materialstärke ausgeführt und andererseits mit einer Führungsschräge 14 versehen. Diese wird dann wirksam, wenn bei der Herstellung der Rohrverbindung das andere Rohr 3 den Dichtungsabschnitt 5 teilweise komprimiert hat und im Bereich dieser Führungsschräge 14 gegen den Stützbereich 8 gerät. Durch die Anordnung in der Nut 10 taucht das vordere Ende 6 des Rohrdichtungsprofils 1 so tief in das Wandmaterial des Rohrs 2 ein, dass es eine Anlaufschräge 15 für das andere Rohr 3 bildet.

Fig. 12 zeigt ein Ausführungsbeispiel, bei welchem das Rohrdichtungsprofil 1 als integrierte Dichtung in einem Muffenende des Rohrs 2 angeordnet ist. Zu diesem Zweck weist das Rohrdichtungsprofil 1 Verankerungsfüße 16 auf, die sich nach unten in die Wand des Rohrs 2 hinein erstrecken und einen Querschnitt aufweisen, der sich nach unten erweitert. Die beiden Verankerungsfüße 16 sind jeweils dort vorgesehen, wo das Rohrdichtungsprofil 1 ein härteres Material aufweist als im Dichtungsabschnitt 5.

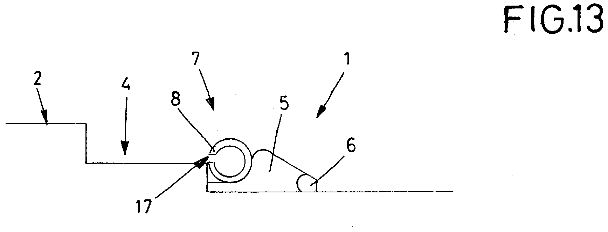

Fig. 13 zeigt ein Ausführungsbeispiel, bei welchem die Stützschulter 7 nicht als geradlinige, nach oben ragende Fahne ausgestaltet ist, sondern vielmehr als Ring. Der Ringquerschnitt verläuft nicht geschlossen, sondern ist durch einen Schlitz 17 unterbrechen. Wenn das andere Rohr 3 zur Herstellung einer Rohrverbindung auf das Rohr 2 aufgeschoben wird, gerät es gegen den oberen Bereich der Stützschulter 7 und verschiebt diesen oberen Bereich - nämlich den Stützbereich 8 - auf den Absatz 4 des Rohrs 2. Wie auch bei den Ausführungsbeispielen, bei denen die Stützschulter 7 als geradlinige Fahne ausgestaltet ist, erfolgt die Verformung bzw. das Umklappen der Stützschulter 7 unterhalb des Stützbereiches 8, nämlich in einem Bereich des Rings, der zunächst aufrecht verläuft und an den Dichtungsabschnitt 5 angrenzt. Zusätzlich wird ggf. auch noch der ebenfalls gebogen verlaufende Stützbereich 8 verformt. Insbesondere dann, wenn sich das andere Rohr 3 auf den Stützbereich 8 auflegt, wird der Stützbereich 8 von seinem gebogenen zu einem geradlinigen Verlauf verformt, wenn er auf den Absatz 4 gepresst wird.

### Bezugszeichen:

- 1: Rohrdichtungsprofil
- 2: Rohr
- 3: Anderes Rohr
- 4: Absatz
- 5: Dichtungsabschnitt
- 6: Vorderes Ende
- 7: Stützschulter
- 8: Stützbereich
- 9: Scharnierabschnitt
- 10: Nut
- 11: Auflagewülste
- 12: Rutschhemmende Profilierung
- 14: Führungsschräge
- 15: Anlaufschräge
- 16: Verankerungsfuß
- 17: Schlitz
- 18: Vorderes Ufer
- 19: Hinteres Ufer

## Patentansprüche

1. Rohrdichtungsprofil (1), das dazu bestimmt ist, zu einem Dichtungsring verarbeitet zu werden, der auf einem Spitzende eines Rohres oder in einer Muffe eines Rohres montiert werden kann
und dessen Querschnitt folgende Merkmale aufweist:
• einen komprimierbaren Dichtungsabschnitt (5),
der von einem ersten, so genannten vorderen Ende (6) des Querschnitts nach hinten ansteigend zu einer ersten Höhe ansteigend verläuft,
wobei der Teil des Rohrdichtungsprofils, der dazu bestimmt ist, bei einem zu einem Dichtungsring verarbeiteten und auf dem Spitzende bzw. in der Muffe des Rohres montierten Rohrdichtungsprofil als erstes in Kontakt mit einem benachbarten Rohr zu geraten, wenn zwei Rohre miteinander verbunden werden, als der vordere Teil des Rohrdichtungsprofils bezeichnet wird,
und wobei Richtungsangaben wie "oben" oder "unten" nur für einen bestimmten Abschnitt des Ringumfangs eines auf einem Spitzende oder in einer Muffe eines Rohres montierten Dichtungsrings zutreffen,
• und eine Stützschulter (7),
die hinter dem Dichtungsabschnitt (5) angeordnet ist und die sich im Gebrauch bis zu einer zweiten, geringeren Höhe erstreckt als der Dichtungsabschnitt (5),
• derart, dass die Stützschulter (7) unter einer von oben nach unten wirkenden Belastung des Rohrdichtungsprofils (1) eine Verpressung des Dichtungsabschnitts (5) begrenzt,
**dadurch gekennzeichnet,**
**dass** die Stützschulter (7) des zu einem Dichtungsring verarbeiteten und auf dem Spitzende bzw. in der Muffe des Rohres montierten Rohrdichtungsprofils aus einer stehend ausgerichteten Bereitschaftsstellung in eine liegend ausgerichtete Gebrauchsstellung klappbar ist, in welcher sie in der geringeren Höhe als der Dichtungsabschnitt (5) verläuft.

2. Rohrdichtungsprofil nach Anspruch 1,
**dadurch gekennzeichnet,**
**dass** die Stützschulter (7) in ihrer Bereitschaftsstellung einen oberen Stützbereich (8) aufweist,
und **dass** sie unterhalb des Stützbereichs (8) einen als Scharnierabschnitt (9) bezeichneten Bereich aufweist, der leichter verformbar als der Stützabschnitt (8) ausgestaltet ist.

3. Rohrdichtungsprofil nach Anspruch 1 oder 2,
**dadurch gekennzeichnet,**
**dass** im Querschnitt vor dem Dichtungsabschnitt (5) eine Anlaufschräge (15) angeordnet ist, die härter ausgestaltet ist als der Dichtungsabschnitt (5).

4. Rohrdichtungsprofil nach einem der vorhergehenden Ansprüche,
**dadurch gekennzeichnet,**
**dass** die Stützschulter (7) sich in ihrer Bereitschaftsstellung bis in eine dritte Höhe erstreckt, welche größer ist als die erste Höhe des Dichtungsabschnitts (5).

5. Rohrdichtungsprofil nach einem der vorhergehenden Ansprüche,
**dadurch gekennzeichnet,**
**dass** die Stützschulter (7) als separates Bauteil ausgestaltet ist.

6. Rohrdichtungsprofil nach Anspruch 5,
**dadurch gekennzeichnet,**
**dass** die Stützschulter (7) an dem Dichtungsabschnitt (5) befestigt ist.

7. Rohrdichtungsprofil nach einem der vorhergehenden Ansprüche,
**dadurch gekennzeichnet,**
**dass** unten am Dichtungsabschnitt (5) und / oder an der Stützschulter (7) Verankerungsfüße (16) angeformt sind.

8. Rohrdichtungsprofil nach einem der vorhergehenden Ansprüche,
**dadurch gekennzeichnet,**
**dass** die Stützschulter (7), im Querschnitt gesehen, einen Ringquerschnitt aufweist
sowie einen den Ring unterbrechenden Schlitz (17).

9. Rohrdichtungsprofil nach einem der vorhergehenden Ansprüche,
**dadurch gekennzeichnet,**
**dass** der Dichtungsabschnitt (5) eine erste Härte aufweist und die Stützschulter (7) eine zweite Härte aufweist, welche größer ist als die Härte des Dichtungsabschnitts (5).

10. Rohrdichtungsprofil nach einem der vorhergehenden Ansprüche,
**dadurch gekennzeichnet,**
**dass** der Dichtungsabschnitt (5) eine erste Härte aufweist und das vordere Ende (6) eine zweite Härte aufweist, welche größer ist als die Härte des Dichtungsabschnitts (5).

11. Rohrdichtungsprofil nach den Ansprüchen 9 und 10,
**dadurch gekennzeichnet,**
**dass** die Stützschulter (7) und das vordere Ende (6) die gleiche Härte aufweisen.

12. Dichtungsanordnung,
mit einem Rohr (2), welches ein als Muffe oder als Spitzende ausgestaltetes Rohrende aufweist,
und mit einem an dem Rohrende zu einem geschlossenen Ring umlaufend angeordneten Rohrdichtungsprofil (1), welches nach einem der vorhergehenden Ansprüche ausgestaltet ist.

13. Dichtungsanordnung nach Anspruch 12,
**dadurch gekennzeichnet,**
**dass** die Stützschulter (7) als separates Element ausgestaltet ist, welches hinter dem Dichtungsabschnitt (5) angeordnet ist.

14. Dichtungsanordnung nach Anspruch 13,
**dadurch gekennzeichnet,**
**dass** die Stützschulter (7) ohne Verbindung zu dem Dichtungsabschnitt (5) hinter diesem angeordnet ist.

15. Dichtungsanordnung nach einem der Ansprüche 12 bis 14,
**dadurch gekennzeichnet,**
**dass** in dem Rohr (2) eine umlaufende Nut (10) verläuft, in welcher das Rohrdichtungsprofil (1) angeordnet ist,
wobei die Nut (10) durch ein vorderes und ein hinteres Ufer begrenzt ist und das hintere Ufer die Aufkantung bildet.

16. Dichtungsanordnung nach Anspruch 15,
**dadurch gekennzeichnet,**
**dass** das vordere Ufer vom Nutgrund aus niedriger ist als das hintere Ufer.

## Claims

1. Pipe sealing profile (1) that is designed to be made into a sealing ring that can be fitted to a spigot end of a pipe or into a socket of a pipe and has a cross-section having the following features:
* a compressible sealing section (5)
that slopes upwards from a first, so-called front end (6) of the cross-section to a first height at the rear,
where that part of the pipe sealing profile is described as the front part of the pipe sealing profile that, if a pipe sealing profile has been made into a sealing ring and has been fitted to the spigot end or into the socket of the pipe, is designed to first come into contact with an adjacent pipe when two pipes are joined together,
and where directional information such as "upwards/top" and "downwards/bottom" apply only to a specific section of the circumference of a sealing ring that has been fitted to a spigot end or into a socket of a pipe
* and a support shoulder (7),
that is arranged behind the sealing section (5) and in use extends as far as a second, lower height than the sealing section (5)
* in such a way that the support shoulder (7), when a load that acts from the top to the bottom is applied to the pipe sealing profile (1), limits the compression of the sealing section (5),
**characterised in**
**that** the support shoulder (7) of the pipe sealing profile that has been made into a sealing ring and has been fitted to the spigot end or into the socket of the pipe can be folded from a vertical stand-by position to a horizontally aligned use position in which it extends at a lower height than the sealing section (5).

2. Pipe sealing profile in accordance with claim 1, **characterised in**
**that** the support shoulder (7) in its stand-by position incorporates an upper support area (8)
and **that** the support shoulder (7) incorporates under the support area (8) an area described as hinge section (9) that is designed to be easier to deform than the support area (8).

3. Pipe sealing profile in accordance with claim 1 or 2, **characterised in**
**that** in the cross-section in front of the sealing section (5) a guide bevel (15) that is designed to be harder than the sealing section (5) is arranged.

4. Pipe sealing profile in accordance with any one of the foregoing claims,
**characterised in**
**that** the support shoulder (7) in its stand-by position extends into a third height that is higher than the first height of the sealing section (5).

5. Pipe sealing profile in accordance with any one of the foregoing claims,
**characterised in**
**that** the support shoulder (7) is designed as a separate component part.

6. Pipe sealing profile in accordance with claim 5, **characterised in**
**that** the support shoulder (7) is fastened to the sealing section (5).

7. Pipe sealing profile in accordance with any one of the foregoing claims,
**characterised in**
**that** anchoring legs (16) are formed under the bottom of the sealing section (5) and/or on the support shoulder (7).

8. Pipe sealing profile in accordance with any one of the foregoing claims,
**characterised in**
**that** the support shoulder (7), viewed in cross-section, has an annular cross-section and a slit (17) that breaks the ring.

9. Pipe sealing profile in accordance with any one of the foregoing claims,
**characterised in**
**that** the sealing section (5) has a first hardness and the support shoulder (7) a second hardness that is greater than the hardness of the sealing section (5).

10. Pipe sealing profile in accordance with any one of the foregoing claims,
**characterised in**
**that** the sealing section (5) has a first hardness and the front end (6) a second hardness that is greater than the hardness of the sealing section (5).

11. Pipe sealing profile in accordance with claims 9 and 10, **characterised in**
**that** the support shoulder (7) and the front end (6) have the same hardness.

12. Sealing assembly
having a pipe (2) that incorporates a pipe end that is designed as a socket or a spigot end
and having a pipe sealing profile (1) that is arranged all the way around at the pipe end to form a closed ring and is designed in accordance with any one of the foregoing claims.

13. Sealing assembly in accordance with claim 12, **characterised in**
**that** the support shoulder (7) is designed as a separate element that is arranged behind the sealing section (5).

14. Sealing assembly in accordance with claim 13, **characterised in**
**that** the support shoulder (7) is arranged behind the sealing section (5) without a connection to the sealing section (5).

15. Sealing assembly in accordance with any one of claims 12 to 14, **characterised in that** a groove (10) in which the pipe sealing profile (1) is arranged extends circumferentially in the pipe (2),
where the groove (10) is delimited by a front and a rear side and the rear side forms the upstand.

16. Sealing assembly in accordance with claim 15, **characterised in**
**that** the front side viewed from the groove bottom is lower than the rear side.

## Revendications

1. Profilé d'étanchéité (1) pour tuyau, destiné à être transformé en anneau d'étanchéité pouvant être monté sur une extrémité en pointe d'un tuyau ou dans un manchon de tuyau
et dont la section présente les caractéristiques suivantes :
* un segment (5) d'étanchéité compressible,
dont le tracé va en montant vers l'arrière depuis une première extrémité (6) de la section dite extrémité avant, pour atteindre une première hauteur,
sachant que la partie du profilé d'étanchéité pour tuyau destinée - pour un profilé d'étanchéité pour tuyau transformé en anneau d'étanchéité et monté sur l'extrémité en pointe ou dans le manchon du tuyau - à entrer la première en contact avec un tuyau voisin lorsque deux tuyaux sont reliés entre eux, est dite « partie avant » du profilé d'étanchéité pour tuyau,
et sachant que des indications de direction comme « en haut » ou « en bas » ne sont pertinentes que pour un certain segment de la circonférence annulaire d'un anneau d'étanchéité monté sur une extrémité en pointe ou dans un manchon d'un tuyau,
* et un épaulement d'appui (7),
qui est disposé derrière le segment d'étanchéité (5) et qui durant l'utilisation s'étend vers une deuxième hauteur moins élevée que le segment d'étanchéité (5),
* de sorte que l'épaulement d'appui (7), sous une contrainte du profilé d'étanchéité (1) pour tuyau s'exerçant du haut vers le bas, limite une compression du segment d'étanchéité (5), **caractérisé en ce**
**que** l'épaulement d'appui (7) du profilé d'étanchéité pour tuyau, transformé en anneau d'étanchéité et monté sur l'extrémité en pointe ou dans le manchon du tuyau, est basculable d'une position de disponibilité orientée verticale vers une position d'utilisation orientée horizontale, position sur laquelle son tracé est d'une hauteur inférieure à celle du segment d'étanchéité (5).

2. Profilé d'étanchéité pour tuyau selon la revendication 1, **caractérisé en ce**
**que** l'épaulement d'appui (7) présente, sur sa position de disponibilité, une zone d'appui supérieure (8),
et en ce qu'il présente, en dessous de la zone d'appui (8), une zone dite « segment charnière » (9) configurée plus facilement déformable que le segment d'appui (8).

3. Profilé d'étanchéité pour tuyau selon la revendication 1 ou 2, **caractérisé en ce qu'**est disposé, dans la section située devant le segment d'étanchéité (5), un biseau d'approche (15) configuré plus dur que le segment d'étanchéité (5).

4. Profilé d'étanchéité pour tuyau selon l'une des revendications précédentes,
**caractérisé en ce**
**que** l'épaulement d'appui (7) s'étend, sur sa position de disponibilité, jusqu'à une troisième hauteur, hauteur qui est plus importante que la première hauteur du segment d'étanchéité (5).

5. Profilé d'étanchéité pour tuyau selon l'une des revendications précédentes,
**caractérisé en ce**
**que** l'épaulement d'appui (7) est configuré sous forme de composant séparé.

6. Profilé d'étanchéité pour tuyau selon la revendication 5, **caractérisé en ce**
**que** l'épaulement d'appui (7) est fixé contre le segment d'étanchéité (5).

7. Profilé d'étanchéité pour tuyau selon l'une des revendications précédentes,
**caractérisé en ce**
**qu'**en bas contre le segment d'étanchéité (5) et/ou contre l'épaulement d'appui (7) ont été modelés des pieds d'ancrage (16).

8. Profilé d'étanchéité pour tuyau selon l'une des revendications précédentes,
**caractérisé en ce que**
l'épaulement d'appui (7) observé en coupe présente une section annulaire ainsi qu'une fente (17) interrompant l'anneau.

9. Profilé d'étanchéité pour tuyau selon l'une des revendications précédentes,
**caractérisé en ce que**
le segment d'étanchéité (5) présente une première dureté et que l'épaulement d'appui (7) présente une deuxième dureté plus importante que la dureté du segment d'étanchéité (5).

10. Profilé d'étanchéité pour tuyau selon l'une des revendications précédentes,
**caractérisé en ce que**
le segment d'étanchéité (5) présente une première dureté et que l'extrémité avant (6) présente une deuxième dureté plus importante que la dureté du segment d'étanchéité (5).

11. Profilé d'étanchéité pour tuyau selon les revendications 9 et 10, **caractérisé en ce que** l'épaulement d'appui (7) et l'extrémité avant (6) présentent la même dureté.

12. Dispositif d'étanchéité,
comprenant un tuyau (2) qui présente une extrémité de tuyau configurée en manchon ou en extrémité en pointe,
et comprenant un profilé d'étanchéité (1) pour tuyau disposé périphériquement en anneau fermé à l'extrémité du tuyau, profilé qui est configuré selon l'une des revendications précédentes.

13. Dispositif d'étanchéité selon la revendication 12, **caractérisé en ce**
**que** l'épaulement d'appui (7) est configuré comme élément séparé disposé derrière le segment d'étanchéité (5).

14. Dispositif d'étanchéité selon la revendication 13, **caractérisé en ce**
**que** l'épaulement d'appui (7) est disposé derrière le segment d'étanchéité (5), sans liaison avec ce dernier.

15. Dispositif d'étanchéité selon l'une des revendications 12 à 14, **caractérisé en ce**
**que** dans le tuyau (2) se trouve une gorge (10) au tracé périphérique dans laquelle est disposé le profilé d'étanchéité (1) pour tuyau,
sachant que la gorge (10) est limitée par une bordure avant et une bordure arrière et que la bordure arrière forme le bord relevé.

16. Dispositif d'étanchéité selon la revendication 15, **caractérisé en ce**
**que** la bordure avant est plus basse, depuis le fond de la gorge, que la bordure arrière.
